(19) Europäisches Patentamt
European Patent Office
Office européen des brevets

(11) Publication number : 0 434 179 B1

(12) **EUROPEAN PATENT SPECIFICATION**

(45) Date of publication of patent specification : **15.06.94 Bulletin 94/24**

(51) Int. Cl.$^5$ : **C09D 11/10,** C09D 11/16

(21) Application number : **90307397.1**

(22) Date of filing : **06.07.90**

# (54) Water-resistant ink composition.

(30) Priority : **19.12.89 JP 327145/89**

(43) Date of publication of application : **26.06.91 Bulletin 91/26**

(45) Publication of the grant of the patent : **15.06.94 Bulletin 94/24**

(84) Designated Contracting States : **AT BE CH DE DK ES FR GB GR IT LI LU NL SE**

(56) References cited :
**US-A- 4 659 382**
**RESEARCH DISCLOSURE, no. 194, June 1980, Havant ANONYMUS "Multi-purpose dye-less ink for ink jet prin- ters"**
**DATABASE WPIL, no. 89-003 471 DERWENT PUBLICATIONS LTD., London, GB; & JP-A-63 280 781**

(73) Proprietor : **KABUSHIKI KAISHA PILOT
8-1 Nishigotanda 2-chome,
Shinagawa-ku
Tokyo 141 (JP)**

(72) Inventor : **Tomita, Hajime c/o Kabushiki Kaisha Pilot
1744-2 Naganuma-cho
Isezaki-shi
Gunma 372 (JP)**
Inventor : **Sonoda, Yasuo c/o Kabushiki Kaisha Pilot
1744-2 Naganuma-cho
Isezaki-shi
Gunma, 372 (JP)**

(74) Representative : **Baverstock, Michael George Douglas et al
BOULT, WADE & TENNANT
27 Furnival Street
London, EC4A 1PQ (GB)**

**EP 0 434 179 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to an aqueous ink composition having high water resistance and excellent age stability and resistance to drying-up.

A variety of researches and developments with reference to aqueous ink compositions having water resistance have hitherto been conducted.

The so-called pigment type aqueous inks containing pigments as the main elements are well-known to the art. However, these pigment type aqueous inks are poor in dispersion stability and have the problem of sedimentation of pigment particles with time. When these inks are used in writing instruments, they tend to plug the ink passages of the instruments and thus inhibit the smooth flow of ink. In this type of ink the deposits of pigment particles along with the evaporation of water causes the so-called drying-up phenomenon at the writing tip of a pen. The result is a deposit of the pigment particles and plugging of the ink passages of the writing instrument.

Accordingly, an aqueous ink composition has been devised having high water resistance, excellent age stability and resistance to drying-up.

Research on the so-called dye type aqueous ink composition containing dyes as main elements has been conducted in order to solve the problems known in the art. This has lead to an examination of the requisite conditions of ink such as the water resistance.

It has been found that in order to impart water resistance to the written matter produced by the ink, it is necessary for the written characters to bond to the paper tightly, and thus various materials have been examined from the aspect of their adhesion to paper.

It has been found in accordance with the present invention that the combination of a polyamine having a molecular weight of 300 or more and an anionic dye greatly improves the water resistance of the written material on the paper.

The improvement as described above is probably due to the insolubilization of the polyamine by reaction with paper and the cationic property of the polyamine leading to reaction with the anionic dye to work as a binder between the paper and the dye.

In addition, the combination exhibits adhesiveness in an aqueous solution having a low viscosity and also affords water resistance to the dye.

However, if the polyamine has a primary amino group as the amino moiety, the primary amino group reacts strongly with the chromophors of the anionic dye thereby resulting in the discoloration of the dye and decreasing the solubility of the reaction product of the dye and the polyamine as well. This leads to sedimentation and lowering of age stability.

However, it is essential for obtaining water resistance as described above to add a polyamine to the ink composition.

According to the invention, if the amino moiety present in the polyamine is a secondary or tertiary amino group, its effect for obtaining water resistance is insufficient.

Therefore, it was determined in accordance with the present invention that a primary amino group must be introduced into a polyamine in order to improve the water resistance.

There have hitherto been produced inks containing polyamines having no primary amino groups. However, such polyamines cannot naturally maintain high resistance to water. If high resistance to water is intended to be obtained with compositions free of primary amino groups, the amount of the polyamine added must necessarily be increased thus leading to an increase in the viscosity. The higher viscosity inhibits the smooth flow of the ink. Such compositions can be employed only with difficulty in writing instruments and cannot be impressed satisfactorily into a writing surface such as paper or the like. As a result, the reaction with the writing surface takes place only at the interface, thus leading to inhibition of water resistance of the writing on the paper.

The present invention features polyamines having a reduced amount of primary amino groups in order to improve the polyamine.

As a result, it has been determined that the use of a polyamine containing primary amino groups in a proportion of 3 - 20% to the total amino groups and having a molecular weight of 300 or more resulted in a great improvement of properties, particularly water resistance, by combining it with an anionic dye to produce a water resistant ink composition. These compositions have greatly improved water resistance and are excellent in resistance in drying-up, age stability and smooth ink flowability.

However, this ink tended with time to undergo a decrease in solubility of the reaction product of the anionic dye and the polyamine due to the primary amino groups contained in an amount of 3 - 20%, and the age stability of the ink was not satisfactory.

It has been found that if an aqueous composition comprising a polyamine containing primary amino groups

in an amount of 3 - 20% and having a molecular weight of 300 or more, an anionic dye and water has added thereto one, two or more stabilizing agents selected from urea, thiourea, ethylene urea, hydroxethyl urea, hydroxypropyl urea, ethylene thiourea, diethyl thiourea, polyvinyl pyrrolidone, sorbitol and dimethylsulfone, the undesired lowering of the solubility of the reaction product of the anionic dye and the polyamine is inhibited and age stability is greatly improved.

This beneficial effect is probably due to the stabilizing agent which prevents the precipitation of the anionic dye which has bonded tc the polyamine by further association.

In addition, the stabilizing agent has excellent moisture retention, so that the resistance to drying-up is improved. The anionic dye used should have a solubility in a proportion of 10% by weight or more to the aqueous vehicle comprising the particular polyamine, the stabilizing agent and water. When using an anionic dye having a solubility of less than 10% by weight, the solubility is too low and age stability is not improved.

It has been found that the addition to the aqueous vehicle of one, two or more wetting agents selected from ethylene glycol, diethylene glycol, propylene glycol, glycerin, triethylene glycol, dipropylene glycol, thiodiglycol, polyglycerin, polyethylene glycol, polypropylene glycol, methyl cellosolve, ethyl cellosolve, butyl cellosolve, methyl carbitol, ethyl carbitol and butyl carbitol was further effective for preventing precipitation.

The present invention provides a water resistant ink composition comprising an aqueous vehicle which contains a polyamine containing primary amino groups in the proportion of 3 - 20% of the amino groups contained in a molecule, a stabilizing agent selected from urea, thiourea, ethylene urea, hydroxyethyl urea, hydroxypropyl urea, ethylene thiourea, diethyl thiourea, polyvinyl pyrrolidone, sorbitol, dimethylsulfone and mixtures of two or more thereof and water and an anionic dye having a solubility of 10% by weight or more in said aqueous vehicle.

As described above the water resistant ink composition according to the invention can contain at least one wetting agent selected from ethylene glycol, diethylene glycol, propylene glycol, glycerin, triethylene glycol, dispropylene glycol, thiodiglycol, polyglycerin, polyethylene glycol, polypropylene glycol, methyl cellosolve, ethyl cellosolve, butyl cellosolve, methyl carbitol, ethyl carbitol and butyl carbitol.

The polyamine which contains the primary amino groups in proportion of 3 - 20% per molecule used in the present invention is preferably represented by the following structural formulae:

Examples of the polyamines which can be used in the present invention:

(i)

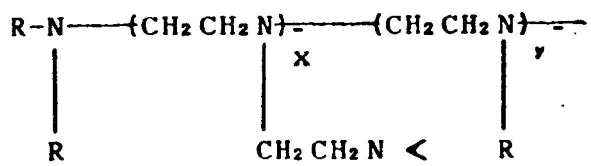

polyethyleneimine derivatives;

(ii)

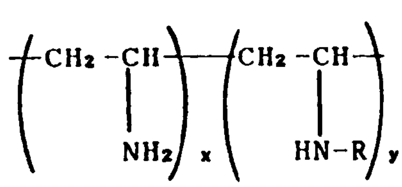

polyvinyl amine derivatives;

(iii)

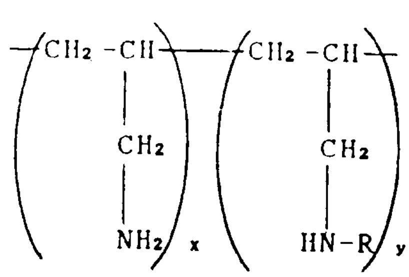

polyacrylamine derivatives

wherein R represents H or $-(CH_2CH_2O)_n-H$, $-(CH_2CH_2CH_2O)_n-H$, or $CH_3$ or the like, x denotes a numeral in the range of 1 - 1,000, and y denotes a numeral in the range of 1 - 1,700.

In this connection, the primary amino groups are contained in a proportion of 3 - 20% of the total amino groups in a molecule, and the molecular weight is in the range of 300 or more. The polyamine containing the primary amino groups in a proportion of 3 - 20% of the total polyamine in a molecule is preferably incorporated in an ink composition in an amount of 0.5 - 5% by weight.

As the polyamine of the present invention, there can be used other polyamines, such as allylamine and the like in addition to those derived from polyethyleneimine, provided that the primary amino groups are contained in a proportion of 3% to 20% of the total amino groups per molecule in said polyamine.

The anionic dye used in the present invention is mainly selected from direct dyes or acid dyes, which are the ones having as hydrophilic groups anionic groups such as
$-SO_3Na$, -COONa or the like.

For example, the direct dyes may be Direct Black 19, 154, Direct Blue 87 and the like; and the acid dyes may be Acid Blue 1, 9, 90, 93 and Acid Red 18, 27, 87, 92 and 94, Acid Yellow 23 and 79, and Acid Orange 10 and the like.

The aqueous vehicle used in the present invention is prepared by incorporating water (deionized water) with a particular polyamine and the stabilizing agents.

The amount of the stabilizing agents are preferably in the range of 5 - 20% by weight, more preferably about 10% by weight.

The amount of the wetting agent incorporated is preferably in the range of 10 - 30% by weight.

The present invention is illustrated specifically with reference to the following examples.

Example 1

A water resistant ink composition was prepared by uniformly blending the following components:

| | |
|---|---|
| Direct Black 154 (solubility in vehicle, 20% or more) | 4.5% by weight |
| Polyamine (containing 3% of primary amino groups) | 3.0% by weight |
| ethylene glycol | 20.0% by weight |
| Urea | 10.0% by weight |
| pH adjustor | 0.3% by weight |
| Surfactant (GAFAC,RS-410,TOHO Chem.) | 0.5% by weight |
| Anti-bacterial agent (Proxel XL-2, ICI)* | 1.0% by weight |
| Deionized water | 60.7% by weight |

* 10% 1,2 -benzisothiazoline - 3-one in propylene glycol solution

Examples 2 - 34

These examples are different from each other in the kinds and amounts of the polyamine, the stabilizing agent and the wetting agent that were blended and in the solubility of the dye and are shown in table 1.

Comparative Example 1 - 14

The results of Comparative Examples using a polyamine outside the scope of the invention without a stabilizing agent and where the solubility of the anionic dye is in the range of 10% by weight or less are presented in Table 2.

In the table, polyamines A1-A5 are the following polyamines, respectively.

Content of primary amino group;

A1 3%
A2 10%
A3 20%
A4 0%
A5 25%

In Examples 1 - 22, 27 - 30, and in Comparative Examples 1 - 5, 11 - 14, triethanolamine was used. In Examples 23 - 26 and 31 - 34 and in Comparative Examples 6 - 10, sodium hydroxide was used.

As surface active agent an anionic surfactant was used in both Examples and Comparative Examples.

The aqueous ink compositions of the Examples and Comparative Examples were tested for their water resistance, age stability and resistance to drying up. The test results are presented in Table 1 and Table 2.

TABLE 1

| Example | 1 | 2 | 3 | 4 | 5 | 6 | 7 | 8 | 9 | 10 | 11 | 12 | 13 |
|---|---|---|---|---|---|---|---|---|---|---|---|---|---|
| Direct Black 154 (Solubility≧20%) | 4.5 | 4.5 | 4.5 | 4.5 | 4.5 | 4.5 | 4.5 | 4.5 | 4.5 | 4.5 | 4.5 | 4.5 | 4.5 |
| Acid Red 94 (Solubility≧30%) | | | | | | | | | | | | | |
| Acid Blue 90 (Solubility≧20%) | | | | | | | | | | | | | |
| Polyamine A1 | 3.0 | | | | 3.0 | | | 3.0 | | | 3.0 | | |
| Polyamine A2 | | 3.0 | | | | 3.0 | | | 3.0 | | | 3.0 | |
| Polyamine A3 | | | 3.0 | 3.0 | | | 3.0 | | | 3.0 | | | 3.0 |
| Polyamine A4 | | | | | | | | | | | | | |
| Polyamine A5 | | | | | | | | | | | | | |
| Ethylene glycol | 20.0 | 20.0 | 20.0 | | | | | 10.0 | 10.0 | 10.0 | | | |
| Diethylene glycol | | | | | 20.0 | 20.0 | 20.0 | 10.0 | 10.0 | 10.0 | | | |
| Glycerin | | | | | | | | | | | 20.0 | 20.0 | 20.0 |
| Urea | 10.0 | 10.0 | 10.0 | 10.0 | 10.0 | 10.0 | 10.0 | 10.0 | 10.0 | 10.0 | 10.0 | 10.0 | 10.0 |
| Ethylene urea | | | | | | | | | | | | | |
| Hydroxyethyl urea | | | | | | | | | | | | | |
| Sorbitol | | | | | | | | | | | | | |
| Thiourea | | | | | | | | | | | | | |
| pH adjuster | 0.3 | 0.3 | 0.3 | 0.3 | 0.3 | 0.3 | 0.3 | 0.3 | 0.3 | 0.3 | 0.3 | 0.3 | 0.3 |
| Surfactant | 0.5 | 0.5 | 0.5 | 0.5 | 0.5 | 0.5 | 0.5 | 0.5 | 0.5 | 0.5 | 0.5 | 0.5 | 0.5 |
| Antibacterial agent | 1.0 | 1.0 | 1.0 | 1.0 | 1.0 | 1.0 | 1.0 | 1.0 | 1.0 | 1.0 | 1.0 | 1.0 | 1.0 |
| Deionized water | Balance | Balance | Balance | Balance | Balance | Balance | Balance | Balance | Balance | Balance | Balance | Balance | Balance |
| Water resistence | ○ | ◎ | ◎ | ◎ | ○ | ◎ | ◎ | ○ | ◎ | ◎ | ○ | ◎ | ◎ |
| Age stability | ◎ | ◎ | ○ | ○ | ◎ | ◎ | ○ | ◎ | ◎ | ○ | ◎ | ◎ | ○ |
| Resistence to drying-up | A | A | A | B | A | A | A | A | A | A | A | A | A |

TABLE 1 (Continued)

| Example | 14 | 15 | 16 | 17 | 18 | 19 | 20 | 21 | 22 | 23 | 24 | 25 | 26 |
|---|---|---|---|---|---|---|---|---|---|---|---|---|---|
| Direct Black 154 (Solubility≧20%) | 4.5 | 4.5 | 4.5 | 4.5 | 4.5 | 4.5 | 4.5 | 4.5 | 4.5 | | | | |
| Acid Red 94 (Solubility≧30%) | | | | | | | | | | | | | |
| Acid Blue 90 (Solubility≧20%) | | | | | | | | | | 3.0 | 3.0 | 3.0 | 3.0 |
| Polyamine A1 | 3.0 | | | 3.0 | | | 3.0 | | | 2.0 | | | 2.0 |
| Polyamine A2 | | 3.0 | | | 3.0 | | | 3.0 | | | 2.0 | | |
| Polyamine A3 | | | 3.0 | | | 3.0 | | | 3.0 | | | 2.0 | |
| Polyamine A4 | | | | | | | | | | | | | |
| Polyamine A5 | | | | | | | | | | | | | |
| Ethylene glycol | 20.0 | 20.0 | 20.0 | 20.0 | 20.0 | 20.0 | 20.0 | 20.0 | 20.0 | 10.0 | 10.0 | 10.0 | |
| Diethylene glycol | | | | | | | | | | | | | |
| Glycerin | | | | | | | | | | | | | |
| Urea | | | | | | | | | | 5.0 | 5.0 | 5.0 | 5.0 |
| Ethylene urea | 10.0 | 10.0 | 10.0 | | | | | | | | | | |
| Hydroxyethyl urea | | | | 10.0 | 10.0 | 10.0 | | | | | | | |
| Sorbitol | | | | | | | 10.0 | 10.0 | 10.0 | | | | |
| Thiourea | | | | | | | | | | 5.0 | 5.0 | 5.0 | 5.0 |
| pH adjuster | 0.3 | 0.3 | 0.3 | 0.3 | 0.3 | 0.3 | 0.3 | 0.3 | 0.3 | 0.1 | 0.1 | 0.1 | 0.1 |
| Surfactant | 0.5 | 0.5 | 0.5 | 0.5 | 0.5 | 0.5 | 0.5 | 0.5 | 0.5 | 0.5 | 0.5 | 0.5 | 0.5 |
| Antibacterial agent | 1.0 | 1.0 | 1.0 | 1.0 | 1.0 | 1.0 | 1.0 | 1.0 | 1.0 | 1.0 | 1.0 | 1.0 | 1.0 |
| Deionized water | Balance | Balance | Balance | Balance | Balance | Balance | Balance | Balance | Balance | Balance | Balance | Balance | Balance |
| Water resistence | ○ | ◎ | ◎ | ○ | ◎ | ◎ | ○ | ◎ | ◎ | ◎ | ◎ | ◎ | ◎ |
| Age stability | ◎ | ◎ | ○ | ◎ | ◎ | ○ | ◎ | ◎ | ○ | ◎ | ◎ | ◎ | ○ |
| Resistence to drying-up | A | A | A | A | A | A | A | A | A | A | A | A | B |

TABLE 1 (Continued)

| Example | 27 | 28 | 29 | 30 | 31 | 32 | 33 | 34 |
|---|---|---|---|---|---|---|---|---|
| Direct Black 154 (Solubility≧20%) | | | | | | | | |
| Acid Red 94 (Solubility≧30%) | | | | | 3.0 | 3.0 | 3.0 | 3.0 |
| Acid Blue 90 (Solubility≧20%) | 3.0 | 3.0 | 3.0 | 3.0 | | | | |
| Polyamine A1 | 2.0 | | | | 2.0 | | | |
| Polyamine A2 | | 2.0 | | | | 2.0 | | |
| Polyamine A3 | | | 2.0 | 2.0 | | | 2.0 | 2.0 |
| Polyamine A4 | | | | | | | | |
| Polyamine A5 | | | | | | | | |
| Ethylene glycol | 30.0 | 30.0 | 30.0 | | 10.0 | 10.0 | 10.0 | |
| Diethylene glycol | | | | | | | | |
| Glycerin | | | | | | | | |
| Urea | 10.0 | 10.0 | 10.0 | 10.0 | 10.0 | 10.0 | 10.0 | 10.0 |
| Ethylene urea | | | | | | | | |
| Hydroxyethyl urea | | | | | | | | |
| Sorbitol | | | | | | | | |
| Thiourea | | | | | | | | |
| pH adjuster | 0.3 | 0.3 | 0.3 | 0.3 | 0.1 | 0.1 | 0.1 | 0.1 |
| Surfactant | 0.5 | 0.5 | 0.5 | 0.5 | 0.5 | 0.5 | 0.5 | 0.5 |
| Antibacterial agent | 1.0 | 1.0 | 1.0 | 1.0 | 1.0 | 1.0 | 1.0 | 1.0 |
| Deionized water | Balance | Balance | Balance | Balance | Balance | Balance | Balance | Balance |
| Water resistence | ◎ | ◎ | ◎ | ◎ | ○ | ◎ | ◎ | ◎ |
| Age stability | ◎ | ◎ | ◎ | ○ | ◎ | ◎ | ◎ | ○ |
| Resistence to drying-up | A | A | A | B | A | A | A | B |

TABLE 2

| Comparative Example | 1 | 2 | 3 | 4 | 5 | 6 | 7 | 8 | 9 | 10 | 11 | 12 | 13 | 11 |
|---|---|---|---|---|---|---|---|---|---|---|---|---|---|---|
| Direct Black 154 (Solubility≧20%) | 4.5 | 4.5 | 4.5 | 4.5 | | | | | | | | | | |
| Acid Black 2 (Solubility<10%) | | | | | 4.5 | | | | | | | | | |
| Acid Red 94 (Solubility≧30%) | | | | | | 3.0 | 3.0 | 3.0 | 3.0 | | | | | |
| Acid Red 73 (Solubility<5%) | | | | | | | | | | 3.0 | | | | |
| Acid Blue 90 (Solubility≧20%) | | | | | | | | | | | 3.0 | 3.0 | 3.0 | |
| Acid Blue 15 (Solubility<10%) | | | | | | | | | | | | | | 3.0 |
| Polyamine A1 | | | | | 3.0 | | | | | | | | | |
| Polyamine A2 | | | | | | | | | | 2.0 | | | | 2.0 |
| Polyamine A3 | | | | 3.0 | | | | | 2.0 | | | | | |
| Polyamine A4 | 3.0 | 10.0 | | | | 2.0 | 12.0 | | | | | | 2.0 | |
| Polyamine A5 | | | 3.0 | | | | | 2.0 | | | 2.0 | 2.0 | | |
| Ethylene glycol | 20.0 | 20.0 | 20.0 | 20.0 | 20.0 | 10.0 | 10.0 | 10.0 | 10.0 | 10.0 | 30.0 | 30.0 | 30.0 | 30.0 |
| Diethylene glycol | | | | | | | | | | | | | | |
| Glycerin | | | | | | | | | | | | | | |
| Urea | 10.0 | 10.0 | 10.0 | | 10.0 | 10.0 | 10.0 | 10.0 | | 10.0 | 10.0 | 10.0 | | 10.0 |
| pH adjuster | 0.3 | 0.3 | 0.3 | 0.3 | 0.3 | 0.1 | 0.1 | 0.1 | 0.1 | 0.1 | 0.3 | 0.3 | 0.3 | 0.3 |
| Surfactant | 0.5 | 0.5 | 0.5 | 0.5 | 0.5 | 0.5 | 0.5 | 0.5 | 0.5 | 0.5 | 0.5 | 0.5 | 0.5 | 0.5 |
| Antibacterial agent | 1.0 | 1.0 | 1.0 | 1.0 | 1.0 | 1.0 | 1.0 | 1.0 | 1.0 | 1.0 | 1.0 | 1.0 | 1.0 | 1.0 |
| Deionized water | Balance | Balance | Balance | Balance | Balance | Balance | Balance | Balance | Balance | Balance | Balance | Balance | Balance | Balance |
| Water resistence | × | × | ◎ | ◎ | ◎ | × | × | ◎ | ◎ | ◎ | × | ◎ | ◎ | ◎ |
| Age stability | ◎ | ○ | × | × | × | ◎ | ○ | × | × | × | ◎ | × | × | × |
| Resistence to drying-up | A | B | D | D | D | B | C | D | D | D | A | D | D | D |

(Note to Tables 1 and 2)

Water resistance: Blotting of ink and stain on a writing surface such as writing paper by dipping the surface in water immediately after writing on it,

: none; O: a little; x: present

Age stability: Abnormalities such as precipitation, thickening after permitting the composition to stand in a glass container at 50°C for 2 months,

: none; O: a little; x: present

Resistance to drying-up: Period until abnormality occurs in the written material on leaving the pen to stand with the cap of the pen removed under the conditions of 40°C, and 50% RH,

A: 2 months or more; B: 1 month or more;
C: 7 days or more; D: less than 7 days.

The present invention, as apparent from the comparison tests described above, provides an excellent ink composition which by its particular composition has solved the problems of water resistance, age stability and resistance to trying-up which have not hitherto been solved. The water resistant ink composition of the present invention is particularly suitable for water ball point pens or felt tipped pens and exhibits excellent properties.

## Claims

1. A water resistant ink composition comprising an aqueous vehicle which contains a polyamine containing primary amino groups in proportion of 3 - 20% of the amino groups contained in the polyamine molecule, a stabilizing agent selected from urea, thiourea, ethylene urea, hydroxyethyl urea, hydroxypropyl urea, ethylene thiourea, diethyl-thiourea, polyvinyl pyrrolidone, sorbitol, dimethylsulfone, and mixtures of two or more thereof and water, and an anionic dye having a solubility of 10% by weight or more in said aqueous vehicle.

2. A water resistant ink composition as claimed in claim 1, wherein the composition contains a wetting agent selected from ethylene glycol, diethylene glycol, propylene glycol, glycerin, triethylene glycol, dipropylene glycol, thiodiglycol, polyglycerin, polyethylene glycol, polypropylene glycol, methyl cellosolve, ethyl cellosolve, butyl cellosolve, methyl carbitol, ethyl carbitol, butyl carbitol and mixtures thereof.

3. A water resistant ink composition as claimed in claim 1 or claim 2 wherein the polyamine is selected from polyamines having the following structural formulae:

(i) 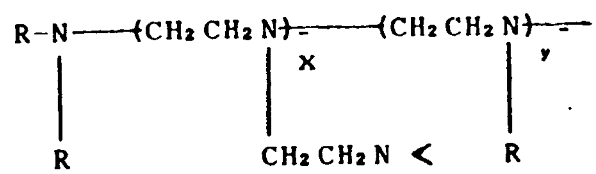

polyethyleneimine derivatives;

(ii) 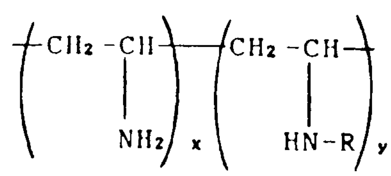

polyvinyl amine derivatives;

(iii) 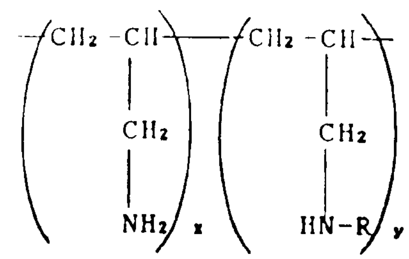

polyacrylamine derivatives

wherein R represents H or $(CH_2CH_2O)_n H$, $(CH_2CH_2CH_2O)_n H$, or $CH_3$ or the like, x denotes a numeral in the range of 1 - 1,000, and y denotes a numeral in the range of 1 -1,700.

4. A water resistant ink composition as claimed in any one of the preceding claims wherein the polyamine is incorporated in the composition in an amount of 0.5 to 5% by weight of the composition.

5. A water resistant ink composition as claimed in any one of the preceding claims wherein the anionic dye is a direct dye or an acid dye.

6. A water resistant ink composition as claimed in any one of the preceding claims wherein the stabilizing agent is present in an amount in the range of 5 - 20% by weight of the composition, more preferably about 10%.

7. A water resistant ink composition as claimed in any one of claims 2 to 6 wherein the wetting agent is incorporated in a range of 10 - 30% by weight of the composition.

8. Use of the water resistant ink composition as claimed in any one of the preceding claims in ball point pens and felt tipped pens.

**Patentansprüche**

1. Wasserfeste Tintenzusammensetzung mit einem wässrigen Träger, der ein Polyamin, welches primäre Aminogruppen in einem Anteil von 3-20% der in dem Polyamidmolekül enthaltenen Aminogruppen enthält, einen Stabilisator aus der Harnstoff, Thioharnstoff, Ethylenthioharnstoff, Sorbit, Dimethylsulfon, und Mischungen von zwei oder mehreren dieser Stoffe und Wasser umfassenden Gruppe und einen anionischen Farbstoff mit einer Löslichkeit von 10 oder mehr Gew.% in dem wässrigen Träger enthält.

2. Wasserfeste Tintenzusammensetzung nach Anspruch 1, bei der die Mischung ein Benetzungsmittel enthält, das aus Ethylenglykol, Diethylenglykol, Propylenglykol, Glycerin, Triethylenglykol, Dipropylenglykol, Thioglykol, Polyglycerin, Polyethylenglykol, Polypropylenglykol, Methylcellosolve, Ethylzellosolve, Butylcellosolve, Methylcarbitol, Ethylcarbitol, Butylcarbitol und deren Mischungen ausgewählt ist.

3. Wasserfeste Tintenzusammensetzung nach Anspruch 1 oder 2,
bei der das Polyamin ausgewählt ist aus Polyaminen mit folgenden Strukturformeln:

i)

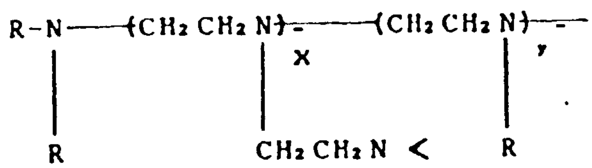

Polyethyleniminderivate;

ii)

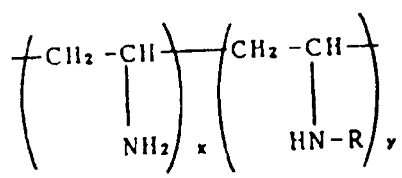

Polyvinylaminderivate;

iii)

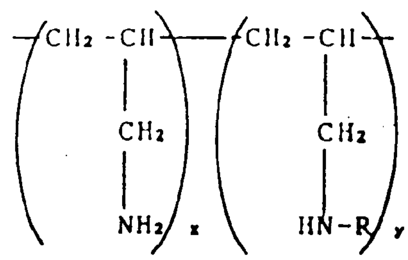

Polyacrylaminderivate,

bei denen R darstellt: H oder $-(CH_2CH_2O)_n H$, $-(CH_2CH_2CH_2O)_n H$, oder $CH_3$ oder dgl., x eine Zahl im Bereich von 1 bis 1000 und y eine Zahl im Bereich von 1 bis 1700 bezeichnet.

**4.** Wasserfeste Tintenzusammensetzung nach einem der vorhergehenden Ansprüche, bei der das Polyamin mit 0,5 - 5 Gew% der Zusammensetzung in der Zusammensetzung enthalten ist.

**5.** Wasserfeste Tintenzusammensetzung nach einem der vorhergehenden Ansprüche, bei der der anionische Farbstoff ein Direktfarbstoff oder ein Säurefarbstoff ist.

**6.** Wasserfeste Tintenzusammensetzung nach einem der vorhergehenden Ansprüche, bei der der Stabilisator in einer Menge im Bereich von 5 - 20 Gew% der Zusammensetzung, vorzugsweise etwa 10%, vorliegt.

**7.** Wasserfeste Tintenzusammensetzung nach einem der Ansprüche 2 bis 6, bei dem das Benetzugsmittel in einem Bereich von 10 - 30 Gew% der Zusammensetzung enthalten ist.

**8.** Verwendung der wasserfesten Tintenzusammensetzung nach einem der vorhergehenden Ansprüche in Kugelschreibern und Filzschreibern.

## Revendications

**1.** Composition d'encre résistante à l'eau, comprenant un véhicule aqueux qui contient une polyamine comportant des groupes amino primaires en une proportion de 3 à 20 % des groupes amino contenus dans les molécules de polyamine, un agent stabilisant choisi parmi l'urée, la thiourée, l'éthylène-urée, l'hydroxyéthyl-urée, l'hydroxypropyl-urée, l'éthylène-thiourée, la diéthyl-thiourée, la poly(vinylpyrrolidone), le sorbitol, la diméthylsulfone et les mélanges de deux de ces composés ou plus, et de l'eau,

et un colorant anionique dont la solubilité dans ledit véhicule aqueux vaut 10 % en poids ou plus.

2. Composition d'encre résistante à l'eau, conforme à la revendication 1, et qui contient un agent mouillant choisi parmi l'éthylèneglycol, le diéthylèneglycol, le propylèneglycol, le glycérol, le triéthylèneglycol, le thiodiglycol, le polyglycérol, le polyéthylèneglycol, le polypropylèneglycol, le méthylcellosolve, l'éthylcellosolve, le butylcellosolve, le méthylcarbitol, l'éthylcarbitol, le butylcarbitol, et leurs mélanges.

3. Composition d'encre résistante à l'eau, conforme à la revendication 1 ou 2, dans laquelle la polyamine est choisie parmi les polyamines présentant les formules structurales suivantes:

i)

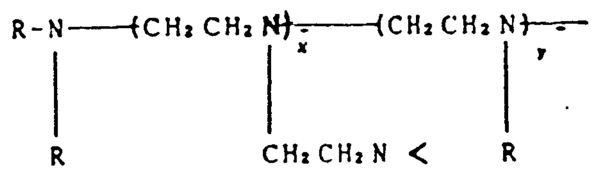

(dérivés de type poly(éthylène-imine))

ii)

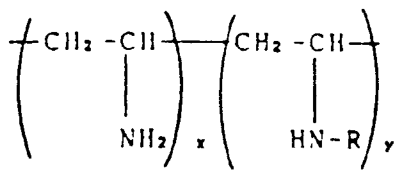

(dérivés de type poly(vinyl-amine))

iii)

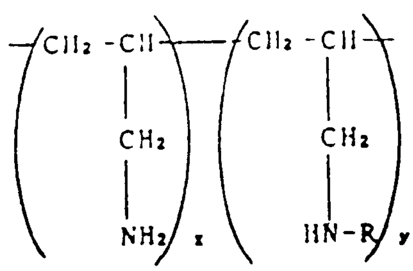

(dérivés de type poly(acryl-amine)

formules dans lesquelles R représente un atome d'hydrogène ou un groupe $-(CH_2CH_2O)_nH$, $-(CH_2CH_2CH_2O)_nH$, $-CH_3$ ou similaire, x représente un nombre valant de 1 à 1000 et y représente un nombre valant de 1 à 1700.

4. Composition d'encre résistante à l'eau, conforme à l'une des revendications précédentes, dans laquelle la polyamine est incorporée en une quantité représentant de 0,5 à 5 % en poids de la composition.

5. Composition d'encre résistante à l'eau, conforme à l'une des revendications précédentes, dans laquelle le colorant anionique est un colorant direct ou un colorant acide.

6. Composition d'encre résistante à l'eau, conforme à l'une des revendications précédentes, dans laquelle l'agent stabilisant se trouve en une quantité représentant de 5 à 20 % en poids et de préférence environ 10 % en poids de la composition.

7. Composition d'encre résistante à l'eau, conforme à l'une des revendications 2 à 6, dans laquelle l'agent mouillant est incorporé en une quantité représentant de 10 à 30 % en poids de la composition.

8. Utilisation d'une composition d'encre résistante à l'eau, conforme à l'une des revendications précédentes, dans des stylos à pointe bille ou dans des crayons à pointe feutre.